# EUROPÄISCHE PATENTANMELDUNG

(11) **EP 0 999 022 A2**
(43) Veröffentlichungstag der Anmeldung: **10.05.2000**
(21) Anmeldenummer: 99120528.7
(22) Anmeldetag: 15.10.1999
(51) Int. Cl.: B29C 31/04, B29C 39/24, B29C 39/44, B30B 15/30

(54) **Steuerung der Abgabe von Kunststoff in einem Formwerkzeug**

(30) Priorität: 21.10.1998 AT 68598
(71) Anmelder: ENGEL MASCHINENBAU GESELLSCHAFT MBH, A-4311 Schwertberg (AT)
(72) Erfinder: Steinbichler, Georg, Dipl.-Ing., 8786 Rottenmann (AT); Giessauf, Josef, 4300 St. Valentin (AT)
(74) Vertreter: Torggler, Paul, Dr.

(57) **Zusammenfassung**

Verfahren zur Ermittlung einer möglichen Einstellung der Steuerung einer Einrichtung zur Abgabe von Kunststoff zwischen die geöffneten Hälften einer Form, wobei
a) einem Rechner die Koordinaten der Formteilkontur (1) in der Trennebene der Formhälften eingegeben werden,
b) innerhalb der Formteilkontur (1) eine Auftragsfläche (6) festgelegt,
c) in Abhängigkeit von der Art der Abgabeeinrichtung deren Verfahrweg (5) bestimmt,
d) die Gesamtzeit für die Abgabe der Gesamtmenge des Kunststoffes festgelegt wird.

## Beschreibung

Die Erfindung bezieht sich auf ein Verfahren zur Ermittlung einer möglichen Einstellung der Steuerung einer Einrichtung zur Abgabe von Kunststoff zwischen die geöffneten Hälften einer Form zur Herstellung eines Formteiles bei einer Presse mit vertikaler Schließrichtung, wobei die Steuerung Ort, Zeitpunkt und Menge der Abgabe des Kunststoffes bestimmt.

Eine Einrichtung zur Abgabe von Kunststoff in eine vertikal schließende Presse kann insbesondere sein:
- ein mehrachsig verfahrbares Spritzaggregat, welches den Kunststoff plastifiziert und über eine fix verbundene Düse ausspritzt und im Werkzeug ablegt,
- eine verfahrbare Schmelzeaustragsdüse mit Schmelzespeicher, der von einer feststehenden Spritzeinheit befüllt wird,
- eine verfahrbare Schmelzeaustragsdüse, die durch flexible Elemente (wie z.B. einen Schlauch) mit einer feststehenden Spritzeinheit verbunden ist.
- Die vorher beschriebenen oder andere Bauarten, die den Kunststoff nicht als Schmelze, sondern bei Temperaturen unter dem Schmelzpunkt bzw. unter der Glasübergangstemperatur ins Werkzeug einbringen, wobei eine Erwärmung im Werkzeug erfolgt.

Der Kunststoff kann jeweils als zusammenhängende Fläche (Strang, Film - z.B. bei der Verwendung von Breitschlitzdüsen), oder in Form von nicht zusammenhängenden 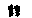 Portionen" aufgetragen werden. Mit 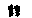 verfahrbar" sind sowohl lineare als auch rotatorische Bewegungen gemeint. Anstelle einer Spritzeinheit ist auch die Verwendung eines Extruders denkbar.

Bei derzeit gebräuchlichen Ausführungen müssen die Koordinaten der von der Schmelzeaustragseinheit abgefahrenen Punkte sowie die Fahr- und Einspritzgeschwindigkeiten manuell eingestellt werden. Ist die Geometrie des Austrittsspaltes nicht konstant, sondern während des Schmelzeauftrags veränderbar, müssen auch diese Parameter eingestellt werden, was oft mit einem großen Zeitaufwand verbunden ist.

Zweck der Erfindung ist es, dem Benützer einen Vorschlag für eine mögliche Einstellung der Steuerung zu geben. Anschließend wird der Benützer typischerweise Versuche durchführen, auf deren Grundlage eine Verfeinerung der Ersteinstellung möglich sein soll.

Erfindungsgemäß ist zur Lösung der gestellten Aufgabe vorgesehen, daß
a) einem Rechner die Koordinaten der Formteilkontur in der Trennebene der Formhälften eingegeben werden,
b) innerhalb der Formteilkontur eine Auftragsfläche festgelegt,
c) in Abhängigkeit von der Art der Abgabeeinrichtung deren Verfahrweg bestimmt,
d) die Gesamtzeit für die Abgabe der Gesamtmenge des Kunststoffes festgelegt wird.

Die Eingabe der Koordinaten der Formteilkontur kann manuell erfolgen, wobei die Koordinaten durch Abmessen am Werkzeug oder aus Werkzeugzeichnungen gewonnen werden können. Vielfach sind die Koordinaten des Formteiles bereits in einem Rechner gespeichert und müssen nur noch der Lage und Orientierung der Abgabeeinrichtung, beispielsweise einer Spritzeinheit, zugeordnet werden.

Ist die Kontur des Formteiles nicht bekannt, so ist es vorteilhaft, ihre Vermessung gleich im Bezugssystem der verwendeten Spritzeinheit vorzunehmen. Man bringt bei dieser Vorgangsweise markante Punkte der Kontur des Formteiles mit der Spritzeinheit zur Deckung. Zur Überprüfung der Position kann im vorderen Bereich der Spritzeinheit ein geeigneter Zeiger, z.B. ein Lichtzeiger, angebracht sein. Durch Speichern einer hinreichenden Zahl von Positionen der Spritzeinheit, welche Punkte der Formteilkontur entsprechen, kann der Rechner eine Kurve generieren, welche der Formteilkontur entspricht.

Die durchschnittliche Dicke des Auftrags des Kunststoffes muß so groß sein, daß das Produkt ihres Wertes mit der Auftragsfläche dem Volumen des Formteiles entspricht. Tatsächlich muß die Auftragsfläche üblicherweise einen Abstand von der Formteilkontur aufweisen, damit der Kunststoff nicht über diese Kontur hinaustritt. Bei dicken Formteilen kann dieser Abstand relativ klein sein. Es besteht jedoch die Bedingung, daß der Kunststoff durch das Schließen der Form noch in den ganzen Formhohlraum verteilbar sein muß. Diese Bedingung ist nur erfüllbar, wenn eine gewisse Mindestdicke des aufgetragenen Stranges dessen vorzeitiges Abkühlen und Erhärten verhindert. Bei sehr dünnen Formteilen wird diese Bedingung nur erreicht, wenn die Auftragsfläche wesentlich kleiner ist als die von der Formteilkontur umschlossene Fläche.

Nach Festlegung der Auftragafläche ist festzulegen, wie die Abgabeeinrichtung den Kunststoffstrang auf dieser Fläche verteilen soll. Bei Breitschlitzdüsen verläuft der Verfahrweg der Abgabeeinrichtung etwa in der Mitte der Auftragsfläche, worauf im einzelnen noch eingegangen wird. Die Einbringung des Kunststoffes in die offene Form kann verschieden rasch erfolgen. Sichergestellt muß sein, daß die Abgabeeinrichtung genau vom Beginn bis zum Ende des Auftreffens des Kunststoffes in der Formkavität den festgelegten Verfahrweg zurücklegt. Beispielsweise durch Festlegung der Verfahrgeschwindigkeit der Abgabeeinrichtung kann damit die Geschwindigkeit der übrigen Abläufe festgelegt werden. DieVerfahrgeschwindigkeit bietet sich deshalb als Einstellparameter an, weil es sinnvoll ist, ihren Wert konstant zu halten. Dies ist nicht nur dynamisch vorteilhaft, sondern erlaubt es auch, relativ einfach Strangdicke und Auftragsdicke in Einklang zu bringen, den Kunststoffstrang also abzulegen, ohne daß dieser erheblich gedehnt oder gestaucht wird. Hiezu ist es lediglich erforderlich, daß die pro Zeiteinheit zur Erzielung einer gewünschten Strangdicke zugeführte Menge an Kunststoff in Abhängigkeit von der Geschwindigkeit der Abgabeeinrichtung und der momentanen Düsengeometrie geregelt wird.

Einzelheiten der Erfindung werden anschließend anhand der Zeichnung erläutert.

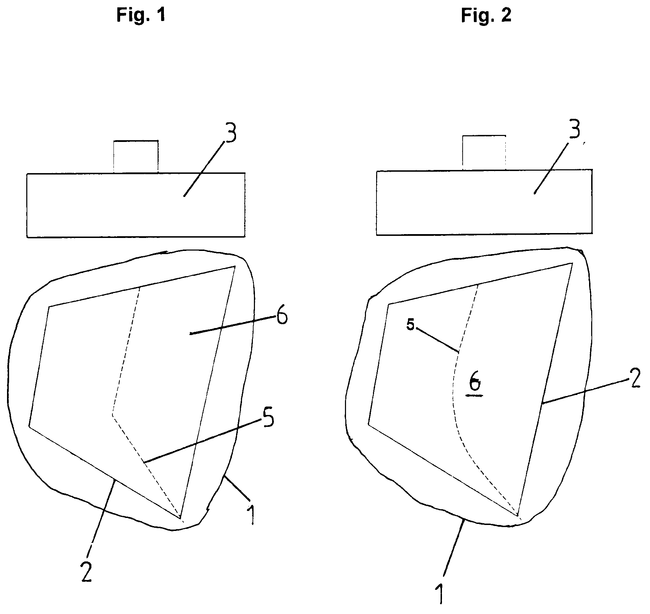

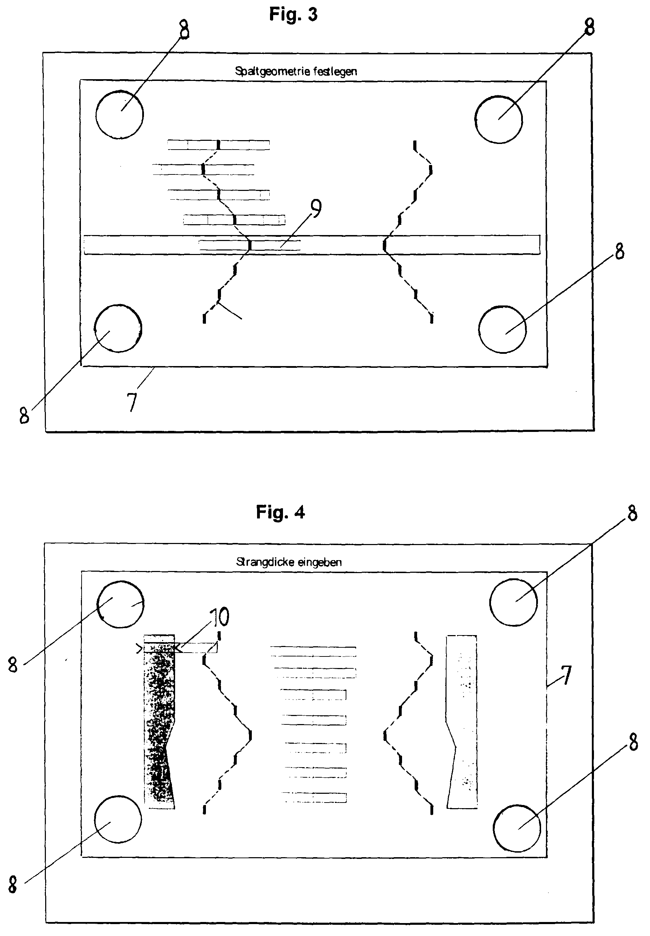

Fig. 1 und 2 zeigen Beispiele für die Festlegung des Verfahrweges in schematischer Draufsicht, Fig. 3 und 4 die graphische Darstellung vom Rechner vorgeschlagener Eingabewerte.

Fig. 1 und 2 können insoweit zusammenfassend behandelt werden, als es jeweils damm geht, daß zunächst vom Rechner innerhalb der eingegebenen Formteilkontur 1 eine durch die Kontur 2 begrenzte Ablagefläche definiert wird. Diese soll von einer Breitschlitzdüse 3 gleichmäßig mit Kunststoff belegt werden. Ist wie im Fall von Fig. 1 und 2 eine Düse mit symmetrisch zur Mittellinie verstellbarer Düsenöffnung vorgesehen, folgt die Düse bei ihrer Bewegung dem Weg 5 durch die Mitte der Abgabefläche 6, wobei der tatsächliche Weg ruckartige Änderungen vermeidet und damit Fig. 2 entspricht.

In Fig. 3 und 4 ist beispielsweise gezeigt, wie die Einstellung einer Steuerung unter Zugrundelegung der Erfindung vom Benützer fixiert oder modifiziert werden kann. Jede dieser Figuren zeigt in Draufsicht die Bildschirmwiedergabe einer unteren Formaufspannplatte 7, welche von Holmen 8 durchsetzt ist. Ausgegangen wird von zwei symmetrisch angeordneten Kavitäten, deren Kontur wahlweise auf dem Bildschirm dargestellt sein könnte. In Fig. 3 und 4 ist jeweils der Verfahrweg 5 bzw. 5' für eine der beiden als Abgabeeinheit dienenden Breitschlitzdüsen dargestellt. In Fig. 3 werden dem Benützer der Reihe nach Spaltbreiten 9 vorgeschlagen, welche er bestätigen oder modifizieren kann. In Fig. 4 sind die bereits festgelegten Spaltbreiten festgehalten. Hier wird in analoger Weise die Auftragsdicke 10 entlang der Einschubrichtung der Düse mit der Spaltbreite 9 fixiert.

## Patentansprüche

1. Verfahren zur Ermittlung einer möglichen Einstellung der Steuerung einer Einrichtung zur Abgabe von Kunststoff zwischen die geöffneten Hälften einer Form zur Herstellung eines Formteiles bei einer Presse mit vertikaler Schließrichtung, wobei die Steuerung Ort, Zeitpunkt und Menge der Abgabe des Kunststoffes bestimmt, dadurch gekennzeichnet, daß
a) einem Rechner die Koordinaten der Formteilkontur in der Trennebene der Formhälften eingegeben werden,
b) innerhalb der Formteilkontur eine Auftragsfläche festgelegt,
c) in Abhängigkeit von der Art der Abgabeeinrichtung deren Verfahrweg bestimmt,
d) die Gesamtzeit für die Abgabe der Gesamtmenge des Kunststoffes festgelegt wird.

2. Verfahren nach Anspruch 1, dadurch gekennzeichnet, daß die Formteilkontur bestimmt wird, indem sie mit einer Spritzeinheit zur Abgabe des Kunststoffes abgefahren wird und markante Punkte gespeichert werden.

3. Verfahren nach Anspruch 2, dadurch gekennzeichnet, daß die Spritzeinheit mit einer Anzeige für ihre Position in der geöffneten Form, insbesondere einem Lichtzeiger, versehen ist.

4. Verfahren nach einem der Ansprüche 1 bis 3, dadurch gekennzeichnet, daß die Auftragsfläche bei gegebenem Volumen des Formteiles durch Wahl der durchschnittlichen Auftragadicke bestimmt wird.

5. Verfahren nach einem der Ansprüche 1 bis 4, dadurch gekennzeichnet, daß bei Abgabe durch eine Düse mit veränderiicher Schlitzbreite der Verfahrweg etwa in der Mitte der Auftragsfläche verläuft.

6. Verfahren nach einem der Ansprüche 1 bis 5, dadurch gekennzeichnet, daß die Festlegung der Gesamtzeit für die Abgabe des Kunststoffes durch Festlegung der Geschwindigkeit erfolgt, mit welcher die Abgabeeinrichtung ihren Verfahrweg durchläuft.

7. Verfahren nach Anspruch 6, dadurch gekennzeichnet, daß die Geschwindigkeit einer als verstellbare Schlitzdüse ausgebildeten Abgabeeinrichtung konstant ist.

8. Verfahren nach einem der Ansprüche 1 bis 7, dadurch gekennzeichnet, daß die pro Zeiteinheit zur Erzielung einer gewünschten Strangdicke zugeführte Menge an Kunststoff in Abhängigkeit von der Geschwindigkeit der Abgabeeinrichtung und der momentanen Düsengeometrie geregelt wird.

9. Verfahren nach einem der Ansprüche 1 bis 8, dadurch gekennzeichnet, daß die ermittelten Daten graphisch auf einem Bildschirm dargestellt werden und vom Benützer verändert werden können, bevor sie der Steuerungseinrichtung eingegeben werden.
